# EUROPÄISCHE PATENTSCHRIFT

(11) **EP 2 791 067 B1**
(45) Veröffentlichungstag und Bekanntmachung des Hinweises auf die Patenterteilung: **13.02.2019**
(21) Anmeldenummer: 12816455.5
(22) Anmeldetag: 14.12.2012
(51) Int. Cl.: C02F 1/72, B01F 3/04, B01F 3/08, B01F 5/04

(54) **OXIDATIONSVERFAHREN, DÜSE UND ANLAGE ZUR BEHANDLUNG VON ABWÄSSERN**
OXIDATION METHOD, NOZZLE AND SYSTEM FOR TREATING WASTE WATER
PROCÉDÉ D'OXYDATION, BUSE ET INSTALLATION DE TRAITEMENT D'EAUX USÉES

(30) Priorität: 16.12.2011 DE 102011121193
(43) Veröffentlichungstag der Anmeldung: 22.10.2014
(73) Patentinhaber: Strunk, Sven, 9642 Ebnat-Kappel (CH)
(72) Erfinder: Strunk, Sven, 9642 Ebnat-Kappel (CH)
(74) Vertreter: Forstmeyer, Dietmar
(86) Internationale Anmeldenummer: PCT/EP2012/005172
(87) Internationale Veröffentlichungsnummer: WO 2013/087219

(56) Entgegenhaltungen:
- DE-C1- 4 446 375
- US-A- 4 809 911
- US-B1- 6 237 897

## Beschreibung

Die vorliegende Erfindung betrifft ein Verfahren zur Oxidation belasteter Abwässer sowie eine Anlage zur Durchführung des Verfahrens und insbesondere eine Düse für diese Anlage.

Die heute installierten hausinternen Abwasserentsorgungsanlagen für organische Inhaltstoffe arbeiten meistens nach einem der verschiedenen Fällungsprinzipien (Elektroflotation, Flockung mit Sedimentation oder Flotation, etc.), wobei in allen Verfahren unerwünschter Schlamm als Folgeproblem entsteht. Die Schlammentsorgung bereitet zunehmend große Schwierigkeiten, da eine einfache Deponierung kaum mehr möglich ist und als Ausweg nur die Schlammverbrennung zur Verfügung steht. Alle Flockungs-/Fällungsverfahren können zudem lediglich eine mehr oder weniger von den Inhaltstoffen abhängige Teilentlastung des Abwassers bewirken, welche jedoch mit einem sehr hohen und schlammverursachenden Chemikalieneinsatz erkauft werden muss.

Zunehmende Bedeutung in der Entsorgung organischer Inhaltstoffe hochbelasteter Teilströme gewinnen deshalb heute schlammfreie Verfahren, wie beispielsweise Autoxidationsprozesse (N. M. Emanuel, Z. K. Maizus, I. P. Skibida, Angew. Chem. 81, 91 - 101 (1969)). Solche Verfahren sind in der chemischen Industrie zur Synthese, aber auch zur Entsorgung von Sondermüll bekannt. Wichtige industrielle Anwendungen in der Entsorgungstechnik liegen in der Hochtemperatur-Nassverbrennung, welche bei 180 - 280 °C mit reinem Sauerstoff (H. R. Kläy, Sulzer Technical Review 4, 41 - 43 (1988)), wie z.B. nach dem Krupp-KATOX-Verfahren, durchgeführt werden. Ein weiterer mit Sauerstoff geführter, als Niederdruckverfahren bezeichneter Autoxidationsprozess ist das Bayer-"LOPROX"-Verfahren (K. Holzer, Umwelt, Bd. 21, 179 - 181 (1991)), welches unter 200 °C mit Betriebsdrücken von 5 - 20 bar arbeitet.

Neuere Verfahren zur Nassverbrennung von organischen Substanzen arbeiten vorwiegend unter 100 °C mit Wasserstoffperoxid und Eisensalzen, wobei dieses System als "Fentons Reagens" bekannt ist (F. Haber, J. Weiss, Proc. Roy. Soc. (London) A 147, 332-351(1934); U. Sewekow, Melliand Textilberichte 1993, 153-157). Die auf reinem "Fentons Reagens" basierenden Verfahren haben bis heute keine industrielle Bedeutung erlangt, da die Verfahrenskosten viel zu hoch sind und der Umsatz zu gering ist. Hierbei ist das Wasserstoffperoxid das alleinige Reagens, welches zur Oxidation der zu entsorgenden Substanzen eingesetzt wird.

In der Offenlegungsschrift DE-A1-4314521 wird ein auf dem Fentons-Reagens basierendes Verfahren beschrieben (FENTOX-Verfahren), welches zur Reinigung von organisch belasteten Industrieabwässern vorgesehen ist. Dabei wird allenfalls mindestens ein zweiter Reaktor zur Abreaktion herangezogen, was aufwendig ist.

In Arbeiten von W. Feuerstein et al. (Vom Wasser 56, 35 - 54 (1981)) wurden auch Kombinationen von Wasserstoffperoxid und Luftsauerstoff zur Oxidation von organischen Abwasserinhaltstoffen beschrieben, wobei der in die Reaktionsmischung eingeleitete Sauerstoff den Abbau erheblich beschleunigt.

Wesentliche Nachteile bekannter Autoxidationsverfahren zur Entsorgung organischer Abwasserinhaltstoffe sind die hohen Temperaturen, die Werkstoffprobleme der Reaktoren, bedingt durch die Betriebstemperatur und das Reaktorprinzip, die unter den Betriebsbedingungen entstehenden unerwünschten Dioxine sowie die Betriebskosten.

In der WO 98/57895 ist die Oxidation mittels O₂ in Anwesenheit von H₂O₂ bei moderaten Drücken und Temperaturen beschrieben. Dieses Verfahren hat aber immer noch einen hohen Bedarf an Peroxid (Radikalstarter) und Schwermetallsalzen. Das liegt daran, dass dabei in einer komplexen Reaktionskette die organische Substanz, das Gas O₂ und das in der wässrigen Phase gelöste Schwermetallsalz miteinander reagieren müssen. Dabei ist ein Problem die exotherme Reaktion:

2 H₂O₂ -> 2 H₂O + O₂

In Anwesenheit von Katalysatoren, wie z. B. Platin, Braunstein (MnO₂), Fe³⁺, I⁻, OH⁻ oder auch einfach nur Staub, tritt ein schneller Zerfall ein. Außerdem reagiert H₂O₂ mit z.B. Eisen(II)salzen gemäss:

2H⁺ + H₂O₂ + 2 Fe²⁺-> 2 H₂O + 2 Fe³⁺

Idealerweise sollte daher gegenüber dem in WO 98/57895 beschriebenen Verfahren der Einsatz von H₂O₂ und von Fe-Salzen minimiert werden.
Aufgabe der Erfindung war es, ein Oxidationsverfahren bereitzustellen, welches insbesondere die Nachteile des in WO 98/57895 beschriebenen Verfahrens überwindet. Eine weitere Aufgabe der Erfindung war es, eine Vorrichtung (z.B. eine Düse) und eine Anlage zur Durchführung dieses Verfahrens bereitzustellen.
Die Aufgabe wird durch die Bereitstellung einer Vorrichtung (insbesondere einer Düse) zur Behandlung von Abwasser (oder für eine Anlage zur Behandlung von Abwasser) gelöst, die ein Außenrohr und ein Innenrohr aufweist, wobei zwischen dem Außenrohr und dem Innenrohr ein Zwischenraum gebildet wird, wobei der Zwischenraum zwischen dem Außenrohr und dem Innenrohr in Längsrichtung der Rohre in mindestens zwei Kammern unterteilt ist, wobei sich das Innenrohr in Längsrichtung verjüngt und wieder erweitert, und das Innenrohr an der verjüngten Stelle in jede Kammer mindestens eine Öffnung aufweist.
Bevorzugt ist eine Vorrichtung wie oben beschrieben, wobei der Zwischenraum zwischen dem inneren und dem äußeren Rohr mindestens zwei Trennwände (Stege) aufweist, die in Längsrichtung verlaufen und den Zwischenraum in mindestens zwei Kammern unterteilen.
Weiter bevorzugt weist das Innenrohr an der verjüngten Stelle ein gesintertes Metall auf, das Öffnungen in Form von Poren aufweist, durch die Stoffe aus den beiden Kammern in das Innenrohr eindringen können.

Erfindungsgemäß ist an der Innenseite und/oder innerhalb des Innenrohrs mindestens ein Katalysator angeordnet, vorzugsweise stromabwärts der Öffnungen.

Wiederum bevorzugt weist die erfindungsgemäße Vorrichtung an der Innenseite des Innenrohrs zumindest in einem Teilbereich (vorzugsweise stromabwärts der Öffnungen) eine Beschichtung auf, die den Katalysator enthält.

Bevorzugt umfasst die Beschichtung eine Grundierung aus Aluminiumoxid (um beispielsweise die Haftung des Katalysators an der Innenseite zu erhöhen).

Wiederum bevorzugt ist der Katalysator aus folgenden Verbindungen/Metallen ausgewählt, die vorzugsweise als Nanopartikel vorliegen: CuO, CoO, Ag₂O, Fe, FeSO₄, MnO₂, ZnO, V₂O₅, Pd, Pt.

Weiter bevorzugt weist die erfindungsgemäße Vorrichtung im Innenrohr Verwirbelungsmittel auf (z. B. wechselnde Durchschnitte der Düse), so dass es zu starken Verwirbelungen und damit zu einer besseren Durchmischung in der Düse kommt. Dadurch wird der Kontakt von Radikalstarter und O₂-haltigem Gas weiter verbessert, so dass der Einsatz von Radikalstarter und Fe-Salzen weiter minimiert werden kann. Beispiele für weitere Verwirbelungsmittel sind horizontale Einbauten in die Düse und Katalysatornetze in der Düse.

Wiederum bevorzugt ist der Zwischenraum zwischen dem Innenrohr und dem Außenrohr in zwei Kammern unterteilt, die vorzugsweise etwa gleich groß sind. Dadurch kann eine gleichmäßige Strömung erreicht werden.

Bevorzugte Abmessungen der Düse sind: Durchmesser des Innenrohrs: breiteste Stelle 5 bis 15 mm (z.B. 11 mm), engste Stelle 2 bis 4 mm (z.B. 3 mm); Durchmesser des Außenrohrs 20 bis 40 mm (z.B. 30 mm); Länge der Düse 50 bis 200 mm, bevorzugt 80 bis 120 mm (z.B. 100 mm).

Als Materialien für die erfindungsgemäße Düse eignen sich z. B. nichtrostende Stähle oder keramische Materialien wie z.B. Porzellan.

Weiterhin betrifft die vorliegende Erfindung eine Anlage zur Behandlung von organisch belastetem Abwasser umfassend mindestens eine oben beschriebene erfindungsgemäße Vorrichtung (Düse).
Des weiteren betrifft die vorliegende Erfindung ein Verfahren zur Behandlung von organisch belastetem Abwasser durch Zugabe eines Radikalstarters, eines sauerstoffhaltigen Gases und gegebenenfalls eines Katalysators (z.B. ein Fe-Salz) in einen Reaktor mit mindestens einer erfindungsgemäßen Vorrichtung (Düse), dadurch gekennzeichnet, dass das Abwasser über mindestens eine erfindungsgemäße Vorrichtung (Düse) in den Reaktor geführt wird, wobei dem Abwasser in der Vorrichtung (Düse) ein Radikalstarter, ein sauerstoffhaltiges Gas und gegebenenfalls ein Katalysator beigemischt werden.
Weiterhin betrifft die vorliegende Erfindung eine Anlage zur Durchführung des erfindungsgemäßen Verfahrens, umfassend eine erfindungsgemäße Vorrichtung. Das Verfahren der vorliegenden Erfindung und die erfindungsgemäße Vorrichtung werden vorzugsweise in der in WO 98/57895 (insbesondere in Fig. 2) beschriebenen Oxidationsanlage durchgeführt bzw. verwendet.
Das Verfahren der vorliegenden Erfindung unterscheidet sind von dem in der WO 98/57895 beschriebenen Verfahren insbesondere durch die folgenden Modifikationen der verwendeten Düse:
1. Die Düse ist vorzugsweise als Venturi-Düse (Venturi-Rohr) gestaltet, so dass sich der Sauerstoff, der Radikalstarter und gegebenenfalls der Katalysator bereits in der Düse intensiv mit dem Abwasser durchmischen können.
2. In der Düse werden katalytisch aktive Elemente angeordnet, z.B. weist die Düse vorzugsweise zumindest an einem Teilbereich der Innenseite (vorzugsweise an der gesamten Innenseite) des Innenrohrs eine Beschichtung auf, die mindestens einen Katalysator enthält, so dass der Sauerstoff aktiviert wird und die Oxidation mit Sauerstoff dadurch katalysiert wird. Beispielsweise kann die Düse mit einer Grundierung ("washcoat") aus z. B. Al₂O₃ belegt sein. In diese können dann die katalytisch aktiven Metalle, Edelmetalle oder deren Salze eingelagert sein bzw. aufgebracht werden. Alternativ oder zusätzlich kann der Katalysator auch innerhalb des Innenrohres, z.B. in Form eines Gitters oder Netzes bzw. auf einem Gitter oder Netz, angeordnet werden. Dadurch kann vermieden werden, dass Katalysator in den Reaktor eingetragen und von dort mit dem gereinigten Abwasser austritt. Dadurch kann z.B. der Katalysatorverbrauch minimiert werden.
3. Der Bereich zwischen dem Außenrohr und dem Innenrohr ist in mindestens zwei Kammern unterteilt, die je eine Öffnung zum Innenrohr aufweisen, so dass der Radikalstarter (z.B. H₂O₂) als auch das O₂-haltige Gas bereits in der Düse zu einer intensiven Vermischung kommen.
4. Das H₂O₂ kommt rasch in Kontakt mit O₂ und hat einen geringeren Kontakt mit Eisen(II)Salzen. Dadurch wird der Einsatz von H₂O₂ und von Fe-Salzen minimiert.

Dadurch ergeben sich folgende Vorteile gegenüber dem in WO 98/57895 beschriebenen Verfahren:
1. Es wird weniger H₂O₂ benötigt;
2. es kann bei tieferen Temperaturen gearbeitet werden;
3. es werden weniger Metallkatalysatoren benötigt; und
4. die Reaktion verläuft schneller.

Das Verfahren, die dazu gehörige Anlage und die Düse werden im Folgenden beschrieben. Es zeigen:
- Fig. 1: Radikalkettenreaktion in schematischer Darstellung.
- Fig. 2: Düse in Seitenansicht.
- Fig. 2a: Düse im Querschnitt.
- Fig. 2b: Düse in Aufsicht.
- Fig. 3: Oxidationsanlage in schematischer Darstellung (aus WO 98/57895)

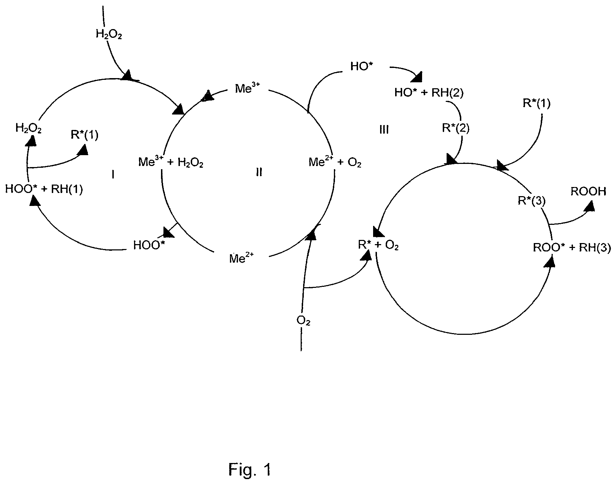

Fig. 1 zeigt mögliche dem Verfahren zugrunde liegenden Radikalkettenreaktionen in schematischer Darstellung.

Die Autooxidation der organischen Abwasserinhaltstoffe wird durch einen Radikalstarter oder durch ein radikalbildendes Oxidationsmittel ausgelöst. Als solche kommen Verbindungen aus der Gruppe der Azo-Verbindungen wie Azobisisobutyronitril (AIBN) und Azobis(cyclohexancarbonitril) oder Verbindungen aus der Gruppe der Peroxid-Verbindungen wie Benzoylperoxid, Di-tert-butylperoxid und Wasserstoffperoxid in Frage, vorzugsweise Wasserstoffperoxid. In Fig. 1 wird Wasserstoffperoxid stellvertretend für einen Radikalstarter oder ein radikalbildendes Oxidationsmittel dargestellt.

Die Radikalkettenreaktion I startet durch die Reaktion des Peroxids mit dem höherwertigen Katalysatorion, indem dieses in eine niedrigere Oxidationsstufe unter Bildung eines Hydroperoxidradikals HOO* überführt wird. Im Folgeschritt reagiert das Hydroperoxidradikal mit dem Substrat RH(1), respektive mit den Abwasserinhaltstoffen. Dies erfolgt unter Freisetzung von Peroxid und eines Kohlenstoffradikals R*(1), wobei beide Spezies wieder in den Kreislauf (I, bzw. III) eingeführt werden.

Als Katalysator kommen Salze der Übergangsmetalle, wie jene von Eisen, Mangan, Kupfer, Chrom in Frage. Eisensulfate sind bevorzugt.

Die Katalysatorreaktion II entspricht einem Reaktionszyklus, in dessen Verlauf das höherwertige Katalysatorion durch das Peroxid in das niederwertige und dieses durch den zugeführten Sauerstoff wieder in das höherwertige überführt wird.

Die Sauerstoffkettenreaktion III startet mit der Zufuhr eines O₂-haltigen Gases zum Reaktionsgemisch. Der Sauerstoff reagiert einerseits mit dem niederwertigen Katalysatorion, wobei ein Hydroxyradikal HO* entsteht, welches mit dem Substrat RH(2) ein Kohlenstoffradikal R*(2) bildet und andererseits mit den im Reaktionsgemisch vorhandenen Kohlenstoffradikalen R* zu Peroxidradikalen ROO* reagiert. In einer Folgereaktion mit dem Substrat RH(3) entsteht das Produkt ROOH unter Freisetzung weiterer Kohlenstoffradikale R*(3). Als O₂-haltiges Gas kommen Luft, Sauerstoff/Luft Mischungen, Sauerstoffmischungen mit anderen Gasen und reiner Sauerstoff in Frage. Die Verwendung von Luft ist dabei bevorzugt.

Die Radikalkettenreaktion I und die Katalysatorreaktion II für sich allein betrachtet bilden den bekannten Fentons-Kreislauf, falls als Radikalstarter Wasserstoffperoxid und als Katalysator ein Eisensalz zur Anwendung gelangt.

Erfindungsgemäß wird der Radikalkettenreaktion I und der Katalysatorreaktion II eine Sauerstoffkettenreaktion III überlagert. Dadurch ergibt sich eine Kombination von 'just in time' Kettenreaktionen, in der das O₂-haltige Gas die Aufgabe als Hauptoxidationsmittel übernimmt. Durch das Zusammenwirken der Kreisläufe I, II und III in der beschriebenen Form wird die Reaktionskette aufrechterhalten.

Vorteilhaft erweist sich, dass als Sauerstoffquelle vorwiegend Luft verwendet wird, was zu einer erheblichen Kostensenkung führt, aber auch, dass insgesamt viel weniger Chemikalien verbraucht werden.

Hierbei ist speziell auf das Verhältnis des Radikalstarters zum Sauerstoff des O₂-haltigen Gases, bzw. auf das Wasserstoffperoxid-/Sauerstoffverhältnis und auf eine spezifische Katalysatoraktivität zu achten. Typische Verhältnisse der durch Wasserstoffperoxid und Sauerstoff oxidierten Substratanteile, bzw. Abwasserinhaltstoffe, sind 1 : 5 oder darüber, insbesondere 1 : 6 oder darüber bis 1 : 10 oder gar 1 : 20. Dies bedeutet, dass mehr als die fünffachen Menge des Wasserstoffperoxydanteiles durch den zugeführten Sauerstoff oxidiert werden kann. Gemäss dem in WO 98/57895 beschriebenen Verfahren konnte der Sauerstoff, der durch das Peroxyd geliefert wurde, auf 20 % des im Laufe der Oxidation benötigten Gesamtsauerstoffbedarfs beschränkt werden. Das erfindungsgemäße Verfahren ermöglicht es, den Peroxydanteil auf 5 % oder weniger zu beschränken. Der Rest wird durch gasförmigen Sauerstoff oxidiert.

Derart hohe Sauerstoffumsatzgrade werden durch die Verwendung der erfindungsgemäße Düse ermöglicht.
Alternativ ist es mit der erfindungsgemäßen Düse auch möglich, ohne Metallsalze in Lösung zu arbeiten.

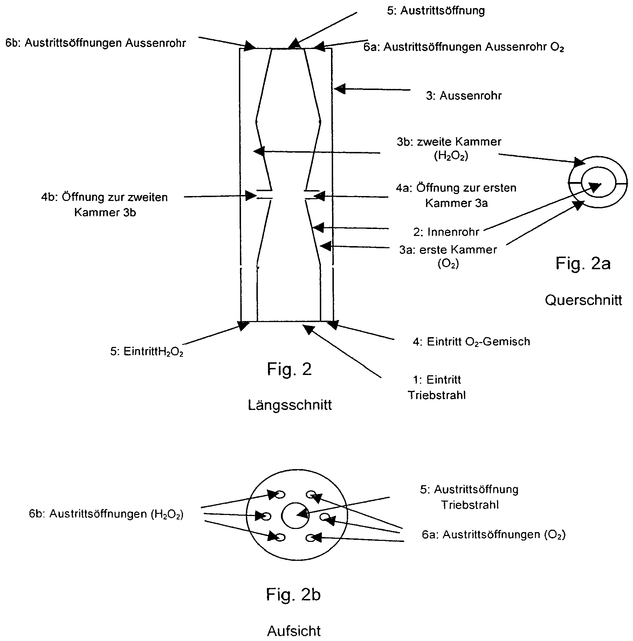

Fig. 2, 2a und 2b zeigen eine Ausführungsform der erfindungsgemäßen Düse in Seitenansicht (Längsschnitt), im Querschnitt und in Aufsicht. Die Düse ist vorzugsweise rotationssymmetrisch aufgebaut. Auf eine Darstellung der Anschlussteile und Befestigungsteile wird verzichtet. Der Abwasser-Triebstrahl tritt durch die Öffnung 1 in das Innenrohr 2 der Düse ein. Dieses Innenrohr verjüngt und erweitert sich wieder. Der Zwischenraum zwischen dem Außenrohr und dem Innenrohr ist zweigeteilt. In die Kammer 3a wird das O₂-haltige Gas eingeleitet. In die Kammer 3b wird der Radikalstarter (z.B. H₂O₂) eingeleitet. An der verjüngten Stelle des Innenrohrs gibt es eine Öffnung 4a zur Kammer 3a und eine Öffnung 4b zur Kammer 3b. Nach dem Prinzip des Venturi-Rohrs treten hier das O₂-haltige Gas und der Radikalstarter (z.B. H₂O₂) zumindest teilweise in das Innenrohr ein.
Der Düsenkopf weist z.B. 6 Bohrungen (6a, 6b) auf, die um die Austrittsöffnung 5 des Innenrohrs herum angeordnet sind. Dadurch wird z.B. der Teil des Gases, der nicht durch die Öffnung 4a in das Abwasser eingetreten ist, beim Eintritt in den Reaktor in feindisperser Form in den Triebstrahl eingearbeitet, um so einen maximalen Stoffaustausch zwischen den Gasbläschen und der umgebenden Flüssigkeit zu garantieren. Weiterhin wird dadurch z.B. der Teil der H₂O₂ Lösung, die nicht durch die Öffnung 4b in das Abwasser eingetreten ist, beim Eintritt in den Reaktor in den Triebstrahl eingearbeitet.
Wie oben bereits beschrieben kann die erfindungsgemäße Vorrichtung (Düse) Teil eines Düsensystems sein wie es z.B. in der WO 98/57895 beschrieben ist. Bevorzugt wird die erfindungsgemäße Vorrichtung (Düse) als Triebstrahldüse bei dem in WO 98/57895 beschriebenen Verfahren verwendet. Ferner wird die erfindungsgemäße Vorrichtung (Düse) vorzugsweise in einer Oxidationsanlage, wie sie in der WO 98/57895 beschrieben ist, eingesetzt.

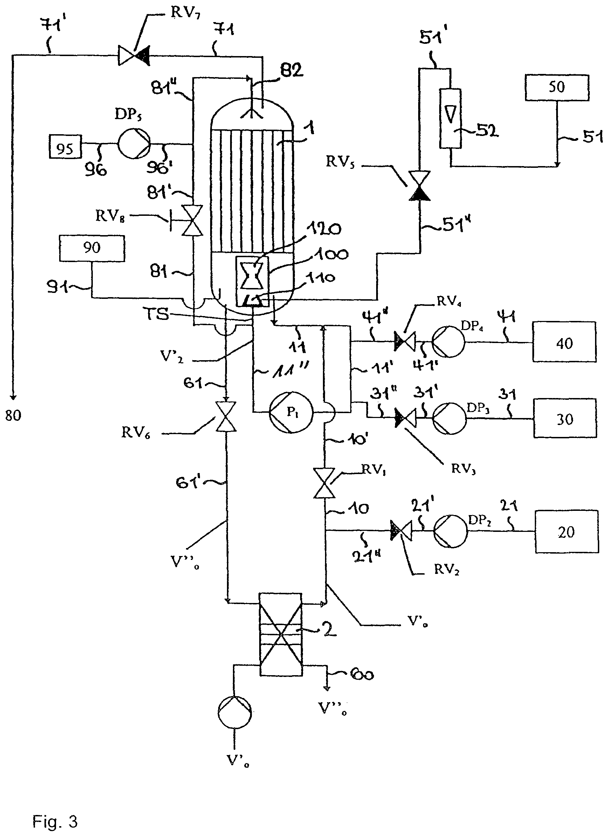

In Fig. 3 ist eine beispielhafte, in WO 98/57895 beschriebene, Oxidationsanlage in schematischer Darstellung gezeigt.

Der in einem Wärmetauscher 2 auf eine Temperaturdifferenz von 5 - 20 °C bezüglich der Reaktionstemperatur vorgeheizte, mit organischer Fracht kontaminierte Wasserstrom, resp. der Abwasserstrom, V'₀ wird über eine Leitung 10, ein Regelventil RV₁, eine Leitung 10' dem Reaktorzirkulationsstrom V'₂, bestehend aus den Leitungen 11, 11' und 11" im Saugteil der Pumpe P₁ zugeführt. Die Leitung 11 verbindet einen Ausgang eines Reaktors 1 mit dem Eingang der Pumpe P₁, die Leitung 11" den Ausgang der Pumpe P₁ mit einem Düsensystem 100, das im unteren Teil des Reaktors angeordnet ist und mindestens eine erfindungsgemäße Düse 110 umfasst. Das Rückführverhältnis des Zirkulationsstromes beträgt z.B. 1 : 0 bis 1 : 20.

Eine Säure- bzw. Alkalizuführung 20 erfolgt über einen Dosierkreislauf mit Dosierpumpe DP₂, Dosierventil RV₂ und den Leitungen 21, 21' und 21" und mündet in die Leitung 10.

Die Zuführung eines Radikalstarters 30 erfolgt über einen Dosierkreislauf mit Dosierpumpe DP₃, Dosierventil RV₃ und den Leitungen 31, 31' und 31" und mündet in die Leitung 11'.

Die Zuführung eines Katalysators 40 erfolgt über einen Dosierkreislauf mit Dosierpumpe DP₄, Dosierventil RV₄ und den Leitungen 41, 41' und 41" und mündet ebenfalls in die Leitung 11'.

Die Zirkulationspumpe P₁ dient sowohl als Mischaggregat für die zudosierten Chemikalien als auch zur Erzeugung eines Triebstrahles TS in Verbindung mit dem Düsensystem 100, das mindestens eine erfindungsgemäße Düse 110 umfasst.

Ein O₂-haltiges Gas 50 wird über ein Flowmeter 52, ein Dosierventil RV₅ und die Leitungen 51, 51' und 51" der erfindungsgemäßen Düse 110 zugeführt.

Der Ablauf V"₀ aus dem Reaktor erfolgt über ein Regelventil RV₆, den Wärmetauscher 2 und die Leitungen 61 und 61'. Die Entlüftung 80 des Reaktors erfolgt über ein Regelventil RV₇ und die Leitungen 71 und 71'. Eine Heizung 90 führt über eine Leitung 91 die für die Startbedingungen notwendige Energie dem Reaktor zu.

Aus der Leitung 11" wird ein Teil des Zirkulationsstromes über ein Regelventil RV₈ und die Leitungen 81, 81' und 81", welche auch als Duschleitungen bezeichnet werden, einer Absprühvorrichtung 82 zugeführt, die sich im oberen Teil des Reaktors befindet und u.a. der Schaumbekämpfung dient. Im weiteren sind hierzu Mittel 95 zur Erzeugung und Stabilisierung einer Mikrodispersion vorgesehen, welche über eine Dosierpumpe DP₅ und die Leitungen 96 und 96' der Leitung 81", bzw. der Absprühvorrichtung 82, zugeführt werden.

Die Duschleitungen 81, 81' und 81" werden ebenfalls durch die Zirkulationspumpe P₁ gespeist und der Fluss durch das Ventil RV₈ reguliert. Das sauerstoffarme Gasgemisch verlässt den Reaktor über die Leitungen 71 und 71' und das Regelventil RV₇. Die in der Anlaufphase benötigte Aufheizenergie kann im Bedarfsfall durch eine im Reaktor angebrachte elektrische Heizung zugeführt werden.

Die vorliegende Erfindung betrifft weiterhin ein Verfahren zum kontinuierlichen Betrieb einer Anlage zur Behandlung von organisch belastetem Abwasser in einem Reaktor, gegebenenfalls mit einem vorgeschalteten Wärmetauscher und mit mindestens einer erfindungsgemäßen Vorrichtung (Düse) durch Zugabe eines Radikalstarters, eines O₂-haltigen Gases und gegebenenfalls eines Katalysators, wobei das Abwasser gegebenenfalls in einem Wärmetauscher vortemperiert und danach über mindestens eine erfindungsgemäße Vorrichtung (Düse) als Triebstrahl in den Reaktor geführt wird, dem Triebstrahl ein Radikalstarter und gegebenenfalls ein Katalysator beigemischt werden und in der Vorrichtung (Düse) dem Triebstrahl ein O₂-haltiges Gas beigemischt wird. Dabei kann gegebenenfalls eine instationäre Strömung erzeugt und eine Reaktionskette gestartet und aufrechterhalten werden. In dieser Reaktionskette erfolgt eine Überlagerung der durch den Radikalstarter ausgelösten Radikalkettenreaktion und der vom O₂-haltigen Gas ausgelösten O₂-Kettenreaktion, in deren Folge der Katalysator seine Wertigkeit zyklisch ändert, und dadurch der Abbau der zu oxidierenden Abwasserinhaltstoffe bewirkt wird.

Der Druckbereich des Reaktors liegt vorzugsweise bei 0 - 4 bar, insbesondere bei 1 - 3 bar. Der Temperaturbereich liegt vorzugsweise bei 80 - 140 °C, insbesondere bei ca. 110 °C. Als Materialien für den Reaktor kommen z.B. V4A-Stähle in Frage. Die Stabilisierung einer gebildeten Mikrodispersion kann z.B. durch die Zudosierung eines schaumarmen Tensides oder durch ein Polyethergemisch, beispielsweise ein Polyethylen/ Polypropylenoxidcopolymerisat, erreicht werden. Gleichzeitig wird die Blasensäulenhöhe möglichst niedrig gehalten, um die Entgasung des Wassers zu erleichtern. Die Einbringung des Polyethers kann auch in den Reaktorzirkulationsstrom erfolgen. Die in der Anlaufphase gegebenenfalls benötigte Aufheizenergie kann im Bedarfsfall durch eine im Reaktor angebrachte elektrische Heizung zugeführt werden.

### Beispiel

Das Verfahren wurde in einer Oxidationsanlage durchgeführt, wie sie in Fig. 3 gezeigt ist: Ein 4-Liter-Reaktor ausgerüstet mit einer erfindungsgemäßen Düse, einem Mammutrohr sowie Mess- und Regeltechnik wird mit 3 Liter wässriger 30%-iger Kaliumhydrogenphtalatlösung (Abwasser) und 0,2 g Eisensulfat (FeSO₄*7H₂O) beschickt. Das entspricht einem CSB (Chemischer Sauerstoffbedarf) von ca. 12'000 mg O₂ pro Liter. Der pH wird auf 3 gestellt und die Mischung auf 120 °C erhitzt. Sobald 120 °C erreicht sind, werden 2,5 g 35%ige Wasserstoffperoxydlösung über 20 Minuten über die Düse zudosiert. Gleichzeitig wird ein Luftstrom von total 22 I Luft über 20 Minuten über die Düse zudosiert. Der pH wird auf 3 gehalten. Das führt zu einer CSB-Reduktion von 85 %.

## Patentansprüche

1. Vorrichtung, insbesondere Düse, zur Behandlung von Abwasser, die ein Außenrohr (3) und ein Innenrohr (2) aufweist, wobei zwischen dem Außenrohr und dem Innenrohr ein Zwischenraum gebildet wird, wobei der Zwischenraum zwischen dem Außenrohr und dem Innenrohr in Längsrichtung der Rohre in mindestens zwei Kammern (3a, 3b) unterteilt ist, wobei sich das Innenrohr in Längsrichtung verjüngt und wieder erweitert, und das Innenrohr an der verjüngten Stelle in jede Kammer (3a, 3b) mindestens eine Öffnung (4a, 4b) aufweist, wobei an der Innenseite und/oder innerhalb des Innenrohrs mindestens ein Katalysator angeordnet ist.

2. Vorrichtung nach Anspruch 1, wobei der Zwischenraum zwischen dem inneren und dem äußeren Rohr mindestens zwei Trennwände aufweist, die in Längsrichtung verlaufen und den Zwischenraum in mindestens zwei Kammern unterteilen.

3. Vorrichtung nach einem der vorhergehenden Ansprüche, **dadurch gekennzeichnet, dass** das Innenrohr an der verjüngten Stelle ein gesintertes Metall aufweist, das Öffnungen (4a, 4b) in Form von Poren aufweist, durch die Stoffe aus den beiden Kammern (3a, 3b) in das Innenrohr eindringen können.

4. Vorrichtung nach einem der vorhergehenden Ansprüche, **dadurch gekennzeichnet, dass** sie an der Innenseite des Innenrohrs zumindest in einem Teilbereich eine Beschichtung aufweist, die mindestens einen Katalysator enthält.

5. Vorrichtung nach Anspruch 4, **dadurch gekennzeichnet, dass** die Beschichtung eine Grundierung aus Aluminiumoxid umfasst.

6. Vorrichtung nach einem der vorhergehenden Ansprüche, **dadurch gekennzeichnet, dass** der Katalysator aus folgenden Verbindungen/Metallen ausgewählt ist, die vorzugsweise als Nanopartikel vorliegen: CuO, CoO, Ag₂O, Fe, FeSO₄, MnO₂, ZnO, V₂O₅, Pd, Pt.

7. Vorrichtung nach einem der vorhergehenden Ansprüche, **dadurch gekennzeichnet, dass** sie im Innenrohr Verwirbelungsmittel aufweist.

8. Vorrichtung nach einem der vorhergehenden Ansprüche, **dadurch gekennzeichnet, dass** die zwei Kammern etwa gleich groß sind.

9. Düsensystem für eine Anlage zur Behandlung von organisch belastetem Abwasser umfassend mindestens eine Vorrichtung nach einem der vorhergehenden Ansprüche.

10. Verfahren zur Behandlung von organisch belastetem Abwasser durch Zugabe eines Radikalstarters, eines sauerstoffhaltigen Gases und gegebenenfalls eines Katalysators in einen Reaktor mit mindestens einer Vorrichtung nach einem der Ansprüche 1 bis 8 oder einem Düsensystem nach Anspruch 9, **dadurch gekennzeichnet, dass** das Abwasser über mindestens eine Vorrichtung nach einem der Ansprüche 1 bis 8 oder mindestens ein Düsensystem nach Anspruch 9 in den Reaktor geführt wird, wobei dem Abwasser in der Vorrichtung oder dem Düsensystem der Radikalstarter, das sauerstoffhaltige Gas und gegebenenfalls der Katalysator beigemischt werden.

11. Anlage zur Durchführung des Verfahrens nach Anspruch 10, umfassend eine Vorrichtung nach einem der Ansprüche 1 bis 8 oder ein Düsensystem nach Anspruch 9.

## Claims

1. A device, in particular nozzle, for the treatment of waste water, comprising an outer tube (3) and an inner tube (2), wherein a space is formed between the outer tube and the inner tube, wherein the space between the outer tube and the inner tube is divided in at least two chambers (3a, 3b) in the longitudinal direction of the tubes, wherein the inner tube tapers and widens again in the longitudinal direction, and the inner tube has at least one opening (4a, 4b) at the tapered portion in each chamber (3a, 3b), wherein at least one catalyst is arranged on the inside and / or inside the inner tube.

2. Device according to claim 1, wherein the space between the inner and the outer tube has at least two partitions which extend in the longitudinal direction and divide the space into at least two chambers.

3. Device according to one of the preceding claims, **characterized in that** the inner tube at the tapered portion comprises a sintered metal having openings (4a, 4b) in the form of pores, through which the substances from the two chambers (3a, 3b) can enter into the inner tube.

4. Device according to one of the preceding claims, **characterized in that** it comprises on the inside of the inner tube at least in a partial region a coating containing at least one catalyst.

5. Apparatus according to claim 4, **characterized in that** the coating comprises a primer of alumina.

6. Device according to one of the preceding claims, **characterized in that** the catalyst is selected from the following compounds / metals, which are preferably present as nanoparticles: CuO, CoO, Ag₂O, Fe, FeSO₄, MnO₂, ZnO, V₂O₅, Pd, Pt.

7. Device according to one of the preceding claims, **characterized in that** it comprises swirling means in the inner tube.

8. Device according to one of the preceding claims, **characterized in that** the two chambers are approximately of the same size.

9. Nozzle system for a plant for the treatment of organically contaminated wastewater comprising at least one device according to one of the preceding claims.

10. A method for treating wastewater contaminated by organic compounds by adding a free radical initiator, an oxygen-containing gas and optionally a catalyst in a reactor having at least one device according to one of claims 1 to 8 or a nozzle system according to claim 9, **characterized in that** the wastewater is fed into the reactor by at least a device according to any one of claims 1 to 8 or at least one nozzle system according to claim 9, whereby the radical initiator, the oxygen-containing gas and optionally the catalyst are admixed to the waste water in the device or the nozzle system.

11. Plant for carrying out the method according to claim 10, comprising a device according to one of claims 1 to 8 or a nozzle system according to claim 9.

## Revendications

1. Dispositif, en particulier une buse, pour le traitement des eaux usées, comprenant un tube externe (3) et un tube interne (2), dans lequel un espace est formé entre le tube externe et le tube interne, dans lequel l'espace entre le tube externe et le tube interne est divisé dans le sens longitudinal des tubes en au moins deux chambres (3a, 3b), le tube interne se rétrécissant et s'élargissant à nouveau dans la direction longitudinale, et le tube interne a au moins une ouverture (4a, 4b) au secteur effilé dans chaque chambre (3a, 3b), dans laquelle au moins un catalyseur est disposé à l'intérieur et / ou à l'intérieur du tube interne.

2. Dispositif selon la revendication 1, dans lequel l'espace entre le tube intérieur et le tube extérieur comporte au moins deux cloisons qui s'étendent dans la direction longitudinale et divisent l'espace en au moins deux chambres.

3. Dispositif selon l'une des revendications précédentes, **caractérisé en ce que** le tube intérieur au niveau du secteur effilé comprend un métal fritté présentant des ouvertures (4a, 4b) en forme de pores par qui les substances provenant des deux chambres (3a, 3b) peuvent pénétrer dans le tube intérieur.

4. Dispositif selon l'une des revendications précédentes, **caractérisé en ce qu'**il comporte à l'intérieur du tube interne au moins dans une région partielle un revêtement contenant au moins un catalyseur.

5. Dispositif selon la revendication 4, **caractérisé en ce que** le revêtement comprend un primaire d'alumine.

6. Dispositif selon l'une des revendications précédentes, **caractérisé en ce que** le catalyseur est choisi parmi les composés / métaux suivants, présents de préférence sous forme de nanoparticules : CuO, CoO, Ag₂O, Fe, FeSO₄, MnO₂, ZnO, V₂O₅, Pd, Pt.

7. Dispositif selon l'une des revendications précédentes, **caractérisé en ce qu'**il comprend des moyens de tourbillonnement dans le tube intérieur.

8. Dispositif selon l'une des revendications précédentes, **caractérisé en ce que** les deux chambres sont approximativement de volume égale.

9. Système de buse pour une système de traitement des eaux usées contaminées par des composés chimiques organiques comprenant au moins un dispositif selon l'une des revendications précédentes.

10. Procédé de traitement des eaux usées contaminées par des composés chimiques organiques par addition d'un initiateur de radicaux libres, d'un gaz contenant de l'oxygène et éventuellement d'un catalyseur dans un réacteur ayant au moins un dispositif selon l'une des revendications 1 à 8 ou un système de buse selon la revendication 9, **caractérisé en ce que** les eaux usées sont introduites dans le réacteur par au moins un dispositif selon l'une quelconque des revendications 1 à 8 ou au moins un système de buse selon la revendication 9, dans lequel l'initiateur de radicaux, le gaz contenant de l'oxygène et éventuellement le catalyseur sont mélangés avec les eaux usées dans le dispositif ou le système de buse.

11. Installation pour la mise en oeuvre du procédé selon la revendication 10, comprenant un dispositif selon l'une des revendications 1 à 8 ou un système de buse selon la revendication 9.
